# EUROPEAN PATENT APPLICATION

(11) **EP 1 511 296 A1**
(43) Date of publication of application: **02.03.2005**
(21) Application number: 03028730.4
(22) Date of filing: 12.12.2003
(51) Int. Cl.: H04N 5/00

(54) **Digital multimedia broadcasting receiver and method for reproducing digital multimedia data**

(30) Priority: 27.08.2003 KR 2003059555
(71) Applicant: Samsung Electronics Co., Ltd., Suwon-city, Kyungki-do (KR)
(72) Inventor: Lee, Kyung-Eun, Yeongtong-gu Suwon-si Gyeonggi-do (KR); Lee, Kyung-Ha, Yeongtong-gu Suwon-si Gyeonggi-do (KR)
(74) Representative: Lang, Johannes, Dipl.-Ing.

(57) **Abstract**

A device and method for receiving digital broadcasting, and more particularly a device and method for providing digital multimedia services in a hybrid digital multimedia broadcasting receiver having a conditional access function. The hybrid digital broadcasting receiver includes a broadcast receiving module including a receiving section for receiving and demodulating a digital broadcasting data stream, a first demultiplexer for demultiplexing and extracting digital broadcasting data corresponding to a selected program, and a conditional access section for detecting conditional access information and decrypting the selected data using the detected information. The hybrid digital broadcasting receiver further includes a decoder module including a second demultiplexer for demultiplexing a digital multimedia data stream and a decoding section for decoding data output from the broadcast receiving module and digital multimedia data output from the second demultiplexer.

## Description

### BACKGROUND OF THE INVENTION

### Field of the Invention:

The present invention relates to a device and a method for receiving digital broadcasting data, and more particularly to a device and a method for providing digital multimedia services in a digital multimedia broadcasting receiver having a conditional access function.

### Description of the Related Art:

In digital multimedia broadcasting (DMB), digital broadcasting data of a plurality of programs is compressed by a highly efficient compression algorithm, such as the MPEG (Moving Picture Expert Group) algorithm. The compressed data is multiplexed and broadcast as digital broadcast waves through a satellite transponder or a terrestrial repeater. In other words, digital broadcasting data is divided into video and audio data and then compressed. The compressed data is broken up into predetermined transmission units called transport packets (TP) and multiplexed into a transport stream (TS) to be transmitted. Digital broadcasting data for a plurality of programs is multiplexed in each transport stream. A user can then select a program from the multiplexed broadcasting data.

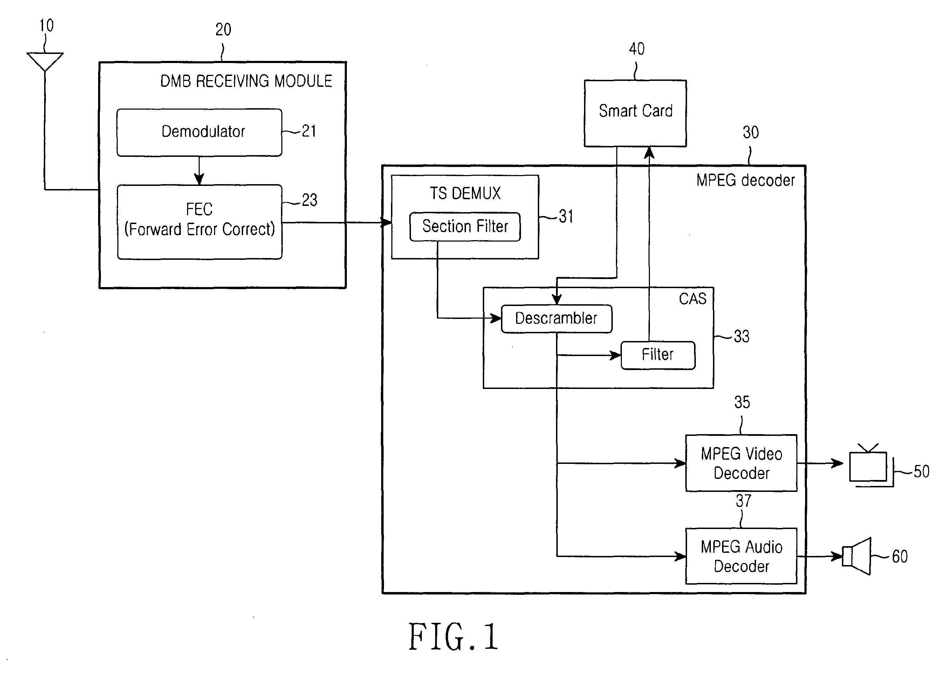

FIG. 1 shows the configuration of a conventional digital multimedia broadcasting receiver. The conventional digital multimedia broadcasting receiver comprises an antenna 10, a DMB receiving module 20, a decoder module 30, a display section 50 and a speaker 60. Digital multimedia broadcasting, which is basically pay broadcasting, adopts a conditional access system (CAS) to restrict access to certain broadcasting programs. The DMB receiving module 20 and the decoder module 30 are each formed in a single chip. A conditional access section 33 provided for conditional access services is included in the decoder module 30.

In the conventional DMB receiver, digital broadcasting data received through the antenna 10 is reproduced into the original transport stream by a demodulator 21 of the DMB receiving module 20. The reproduced transport stream is corrected by an error correcting section 23 and input to the decoder module 30. A TS demultiplexer 31 of the decoder module 30 demultiplexes the transport stream, which includes the multiplexed digital broadcasting data for a plurality of programs. The decoder module 30 extracts transport packets that include digital broadcasting data for a program selected by the user. At this time, the digital broadcasting data is scrambled for conditional access and then transmitted. The conditional access section 33 of the decoder module 30 then receives and descrambles or decrypts the scrambled digital broadcasting data using a scrambling key generated by a smart card 40. The decrypted digital broadcasting data is decoded by an MPEG video decoder 35 and an MPEG audio decoder 37 of the decoder module 30, and provided to the users through the display section 50 and the speaker 60.

As described above, in digital multimedia broadcasting a plurality of programs are multiplexed into a single transport stream to be transmitted. In the conventional DMB receiver, all programs included in a transport stream received by the DMB receiving module 20 are transferred to the decoder module 30 and as described above, each module is formed in a single chip. Generally, data transmission between chips however, is made through a PAD that consumes large amounts of power. There may be some problems therefore, when the conventional DMB receiver that transfers all transport streams received by the DMB receiving module 20 to the decoder module 30 is applied directly to a mobile terminal having a limited power resource. Accordingly, it is necessary to minimize the amount of data transferred to each module of the DMB receiver and thereby reduce the power consumption.

Digital data compression techniques have been rapidly developed. In the conventional DMB receiver, however, the decoder module 30 includes the conditional access section 33 as well as a decoding section for decompression. In situations when only the decoding section needs to be changed, the entire decoder module 30 including the conditional access section 33 must be replaced. Thus, it is also necessary to develop a technique for changing the decoding section independently of the conditional access section 33.

Recent development of digital technologies has driven a new trend of digital integration that eliminates the functional boundary of each digital product. In order to keep up with this new trend, studies have been made to provide mobile terminals, such as cellular phones or personal data assistant (PDA) devices, with a function for receiving digital multimedia broadcasting. However, as stated above, a conventional digital multimedia broadcasting receiver has a structure that decrypts demultiplexed digital broadcasting data at the conditional access section and then decodes the data at the decoding section. The decoder module of such a conventional DMB receiver has a problem in reproducing digital multimedia data other than digital broadcasting data. In order to install the conventional DMB receiver in a mobile terminal, an additional decoding section is required to reproduce non-scrambled multimedia data. However, a plurality of decoding sections, if provided in a mobile terminal having a limited power resource, will cause power problems and make it difficult to form a mobile terminal of small size.

Accordingly, a need exists for a device and a method for providing digital multimedia services in a digital multimedia broadcasting receiver having a conditional access function, where the device minimizes the amount of data transferred and allows modifications without extensive replacements.

### SUMMARY OF THE INVENTION

Accordingly, the present invention has been made to solve the above-mentioned problems occurring in the prior art, and an object of the present invention is to provide a device and a method for reducing data traffic between each module of a digital multimedia broadcasting receiver.

Another object of the present invention is to provide a device and method including a hybrid mobile terminal capable of receiving digital multimedia broadcasting and reproducing other multimedia data.

Still another object of the present invention is to provide a device and method including a hybrid digital multimedia broadcasting receiver capable of providing various multimedia services.

In order to accomplish the above objects, a device and method including a hybrid digital broadcasting receiver that is capable of reproducing digital multimedia data is provided in accordance with an embodiment of the present invention, which includes a broadcast receiving module and a decoder module, wherein the broadcast receiving module comprises: a receiving section for receiving and demodulating a digital broadcasting data stream into which a plurality of compressively encoded and scrambled programs are multiplexed and transmitted; a first demultiplexer for demultiplexing the demodulated digital broadcasting data stream and extracting digital broadcasting data corresponding to a program selected by a user; and a conditional access section for detecting conditional access information and decrypting the selected digital broadcasting data using the detected information. The decoder module comprises: a second demultiplexer for demultiplexing a digital multimedia data stream into which a plurality of compressively encoded digital multimedia data are multiplexed; and a decoding section for decoding digital broadcasting data output from the broadcast receiving module and digital multimedia data output from the second demultiplexer.

A hybrid multimedia broadcasting receiver is also provided in accordance with an embodiment of the present invention which comprises: a receiving section for receiving a digital broadcasting data stream into which digital broadcasting data packets and conditional access information packets for a plurality of programs are multiplexed and transmitted; a first demultiplexer for separating the conditional access information packets and digital broadcasting data packets for a program selected by a user from the received digital broadcasting data stream; and a conditional access section for detecting conditional access information from the conditional access information packets and decrypting the separated digital broadcasting data packets using the conditional access information. The hybrid multimedia broadcasting receiver further comprises a second demultiplexer for receiving a digital multimedia data stream into which compressively encoded audio packets and video packets are multiplexed and separating the audio packets and the video packets from the digital multimedia data stream; and a decoding section for decoding digital broadcasting data packets output from the conditional access section and audio packets and video packets output from the second demultiplexer, wherein the receiving section, first demultiplexer and conditional access section are formed in a first integrated circuit chip while the second demultiplexer and decoding section are formed in a second integrated circuit chip.

A device for processing digital broadcasting data is also provided in accordance with an embodiment of the present invention, which includes: a receiving section for receiving and demodulating a digital broadcasting data stream into which digital broadcasting data packets and conditional access information packets for a plurality of programs are multiplexed and transferred; an error correcting section for correcting an error in the demodulated digital broadcasting data stream; a demultiplexer for separating the conditional access information packets and digital broadcasting data packets for a program selected by a user from the demodulated digital broadcasting data stream; and a conditional access section for detecting conditional access information from the conditional access information packets and decrypting the separated digital broadcasting data packets using the conditional access information, wherein the device is formed in a single integrated circuit chip.

Further, in order to accomplish the above objects, a method is provided in accordance with an embodiment of the present invention for providing digital multimedia services in a hybrid digital broadcasting receiver which includes a broadcast receiving module for processing digital broadcasting data and a decoder module for processing compressively encoded digital data. The method comprises the steps of: receiving at the broadcast receiving module a digital broadcasting data stream into which a plurality of scrambled programs and conditional access information are multiplexed and transferred; separating the conditional access information and digital broadcasting data for a program selected by a user from the digital broadcasting data stream received at the broadcast receiving module and decrypting the separated digital broadcasting data using the conditional access information; decoding the digital broadcasting data input from the broadcast receiving module at the decoder module; receiving a digital multimedia data stream into which compressively encoded audio data and video data are multiplexed at the decoder module; and demultiplexing the digital multimedia data stream at the decoder module to separate the audio data and the video data, and decoding the separated audio data and video data.

### BRIEF DESCRIPTION OF THE DRAWINGS

The above and other objects, features and advantages of the present invention will be more apparent from the following detailed description taken in conjunction with the accompanying drawings, in which:
- FIG. 1: is a block diagram showing an example configuration of a conventional digital multimedia broadcasting receiver;
- FIG. 2: is a block diagram showing an example configuration of a hybrid digital multimedia broadcasting receiver in accordance with an embodiment of the present invention; and
- FIG. 3: is a flow chart showing a process of reproducing digital multimedia data in a hybrid digital multimedia broadcasting receiver in accordance with an embodiment of the present invention.

### DETAILED DESCRIPTION OF THE PREFERRED EMBODIMENTS

Hereinafter, embodiments of the present invention will be described with reference to the accompanying drawings. In the drawings, the same element, although depicted in different drawings, will be designated by the same reference numeral or character. Also, in the following description of the present invention, a detailed description of known functions and configurations incorporated herein will be omitted when it may make the subject matter of the present invention rather unclear.

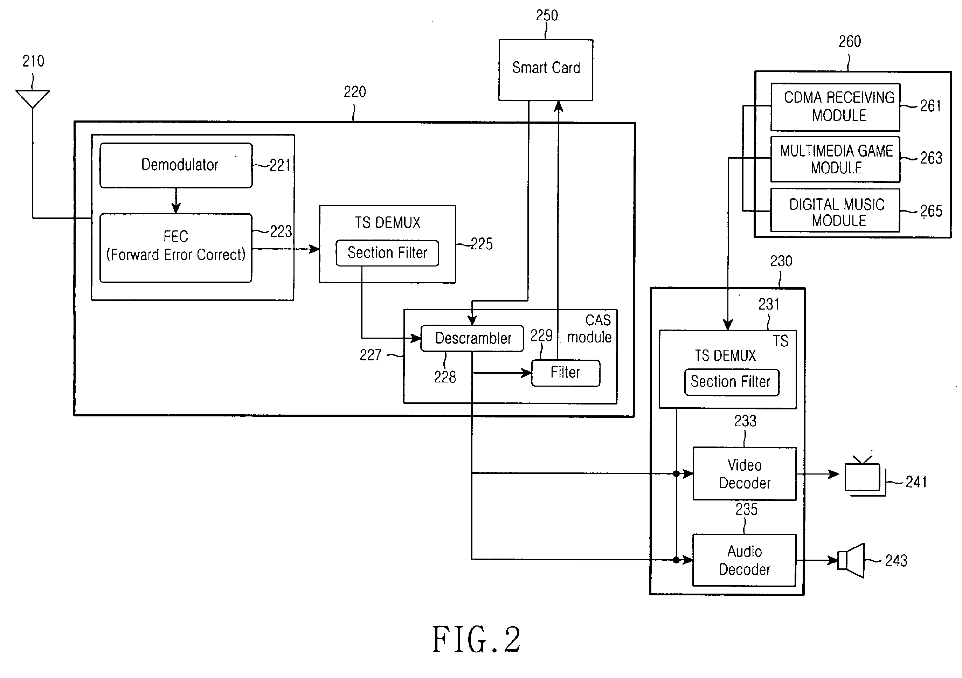

FIG. 2 is a block diagram showing an example configuration of a hybrid digital multimedia broadcasting receiver according to an embodiment of the present invention. Hereinafter, the configuration and operation of the hybrid digital multimedia broadcasting receiver will be described in detail with reference to FIG. 2.

The hybrid digital multimedia broadcasting receiver of FIG. 2 comprises an antenna 210, a broadcast receiving module 220, a decoder module 230, a multimedia module 260, a display section 241 and a speaker 243.

The antenna 210 receives digital broadcast waves in which digital broadcasting data for a plurality of programs are multiplexed and transmitted. The digital broadcasting data is compressively encoded. The digital broadcasting data includes at least one of video data, audio data and additional data, which are broken up into predetermined transmission units called packets. The video data and the audio data are compressively encoded according to a conventional compression algorithm, such as H.264 (MPEG4 p.10) or MPEG4 AAC. The additional data includes image data and text data, such as caption relating to speech data. The divided transport packets are scrambled using a scrambling key for conditional access and multiplexed into a single digital broadcasting data stream, i.e., a transport stream.

The broadcast receiving module 220 includes a demodulator 221, an error correcting section 223, a TS demultiplexer 225 and a conditional access section 227. The broadcast receiving module 220 separates a transport stream of digital broadcasting data corresponding to a program selected by the user from the digital broadcasting data received through the antenna 210. The broadcast receiving module 225 decrypts the scrambled digital broadcasting data and outputs the decrypted data to the decoder module 230 via an interface (not shown).

The demodulator 221 amplifies digital broadcast waves received through the antenna 210. After frequency conversion, the demodulator 221 shapes and demodulates the signal waveforms to reproduce the original transport streams. Also, the demodulator 221 extracts a transport stream of a particular channel on which a program selected by the user is broadcast from the demodulated transport streams, and outputs the extracted transport stream to the error correcting section 223. The error correcting section 223 corrects any signal error in the transport stream.

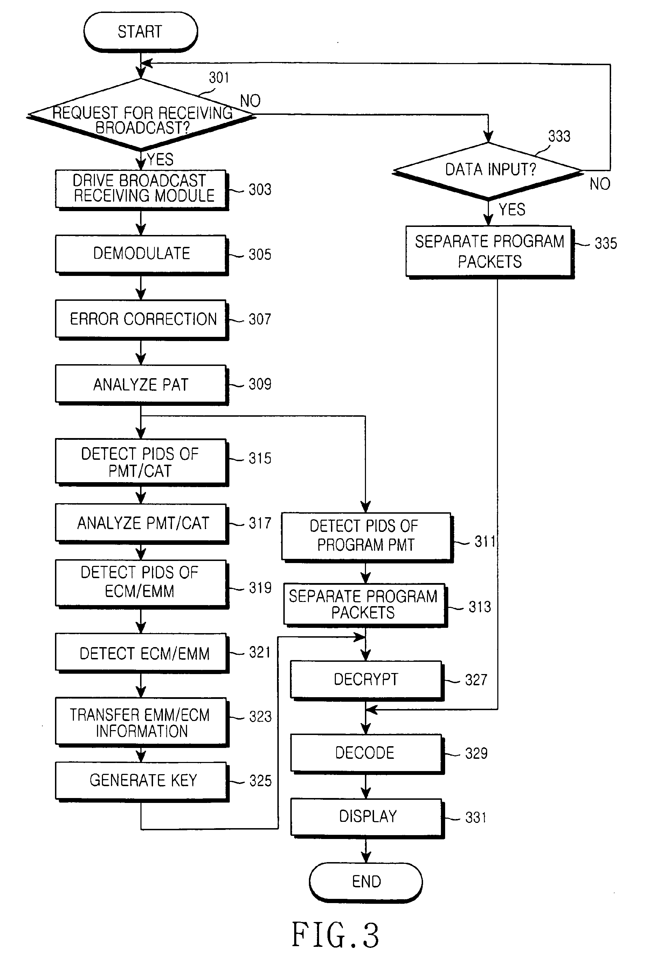

The TS demultiplexer 225 includes a section filter. The TS demultiplexer 225 demultiplexes the transport stream and separates transport packets of digital broadcasting data corresponding to the selected program. The separated packets include at least one of audio data, video data and additional data according to the selected program. The conditional access section 227 includes a descrambler 228 and a packet filter 229. The conditional access section 227 decrypts the digital broadcasting data using a scrambling key generated by a smart card 250. The operation performed in the broadcast receiving module 220 will be described in greater detail below with reference to FIG. 3.

The decoder module 230 includes a TS demultiplexer 231, a video decoder 233 and an audio decoder 235. Although not shown in the drawings, an additional data decoder may also be included in the decoder module 230. The operation of the TS demultiplexer 231 is similar to that performed by the TS demultiplexer 225 of the broadcast receiving module 220. The TS demultiplexer 231 demultiplexes the multiplexed compressively encoded video data and audio data in the digital multimedia data stream. However, the TS demultiplexer 231 of the decoder module 230 is distinguished from the TS demultiplexer 225 of the broadcast receiving module 220 in that the TS demultiplexer 231 supports reproduction of various digital multimedia data other than digital broadcasting data.

The digital multimedia data stream is supplied from the multimedia module 260. Although the embodiments of the present invention described herein are based on the assumption that the multimedia module 260 includes a CDMA receiving module 261, a multimedia game module 263 and a digital music module 265, the multimedia module 260 can be modified to exclude a certain module or include any other module for providing digital multimedia services. The CDMA module 261 provides data, such as Music On Demand (MOD) or Video On Demand (VOD), received via a mobile communication network. The multimedia game module 263 provides multimedia game data. The digital music module 265 provides digital music data useful for music devices, such as singing machines.

The video decoder 233 and the audio decoder 235 decode the data output from the TS demultiplexer 231 and that output from the broadcast receiving module 220, and outputs the decoded data to the display section 241 and the speaker 243, respectively. The smart card 250 stores data and programs for decrypting the conditional access code. The smart card 250 receives and transmits data to and from the conditional access section 227 through a smart card interface, which is not shown in the drawings.

FIG. 3 is a flow chart showing a process of reproducing digital multimedia data in a hybrid digital multimedia broadcasting receiver in accordance with an embodiment of the present invention. Hereinafter, a method for providing various digital multimedia services, including digital broadcasting, in the digital multimedia broadcasting receiver will be described in greater detail with reference to FIGS. 2 and 3.

At step 301, the DMB receiver determines whether there is a request for receiving digital multimedia broadcasting from the user. If there is such a request, the DMB receiver will proceed with step 303. At step 303, the DMB receiver drives the broadcast receiving module 220 for processing digital broadcasting data and proceeds with step 305.

At step 305, the DMB receiver receives digital broadcast waves through the antenna 210. The demodulator 221 amplifies the digital broadcast waves. After frequency conversion, the demodulator 221 shapes and demodulates signal waveforms to reproduce the original transport streams. The demodulator 221 extracts a transport stream of a particular channel on which a program selected by the user is delivered, and outputs the extracted transport stream to the error correcting section 223. At step 307, the error correcting section 223 corrects any signal error in the reproduced transport stream.

At step 309, the TS demultiplexer 225 separates Program Association Table (PAT) transport packets from the error-corrected transport stream and analyzes the packets. The PAT containing a complete list of all program control information is almost always carried in packets with a packet ID (PID) = 0. At step 311, the TS demultiplexer 225 detects PIDs of the Program Map Table (PMT) corresponding to the program selected by the user. At step 313, the TS demultiplexer 225 separates transport packets corresponding to the selected program from the transport stream using the detected PIDs, and provides the separated packets to the conditional access section 227. These transport packets corresponding to the selected program are the digital broadcasting data that constructs the selected program, and are scrambled for the purpose of conditional access.

A scrambling key for descrambling the scrambled transport packets is generated using the Entitlement Control Message (ECM) and the Entitlement Management Message (EMM). The ECM consists of program attribute information and ECM packets, while the EMM consists of contract information of each user and EMM packets. The ECM and EMM messages are transmitted together with scrambled transport packets of video and audio data.

Steps 315 to 325 are provided for generating a scrambling key, and will be described in greater detail below. At step 315, the TS demultiplexer 225 extracts PIDs of Conditional Access Table (CAT) packets and PMT packets containing ECM information. At step 317, the TS demultiplexer 225 separates the CAT packets and the PMT packets from the transport stream using the PIDs and analyzes the separated packets. At step 319, the TS demultiplexer 225 detects PIDs of EMM and ECM packets from the CAT and PMT packets. At step 321, the PIDs of the EMM and ECM packets are sent to the conditional access section 227 and set to values of a packet filter 229. The packet filter 229 detects EMM and ECM packets among the transport packets sent from the TS demultiplexer 225, and extracts the EMM and ECM information.

At step 327, the descrambler 228 of the conditional access section 227 decrypts the conditional access code of the transport packets corresponding to the selected program using the scrambling key input from the smart card 250. The decrypted digital broadcasting data is then input to the decoder module 230.

At step 329, the video decoder 233 and audio decoder 235 of the decoder module 230 decode video data and audio data of the digital broadcasting data, respectively. At step 331, the decoded video data and audio data are output through the display section 241 and the speaker 243, respectively. If additional data, such as caption data is included in the digital broadcasting data, it will be decoded by an additional data decoder (not shown) and output through the display section 241.

If there is no request for receiving digital multimedia broadcasting from the user at step 301, the DMB receiver will proceed with step 333 and will determine whether there is a request to reproduce digital multimedia data. In other words, the TS demultiplexer 231 of the decoder module 230 determines whether digital multimedia data has been input from the multimedia module 260. Although the embodiments above describe a device and method in which the DMB receiver determines whether the receiver is requested to reproduce digital multimedia data after determining whether the receiver is requested to receive digital multimedia broadcasting, it will be obvious to one skilled in the art that the order of determining the two requests can be reversed. Also, it is possible to modify the DMB receiver to receive digital multimedia broadcasting and reproduce digital multimedia data independently and simultaneously.

If it is determined that digital multimedia data has not been input at step 333, the DMB receiver will return to the waiting mode of step 301. If digital multimedia data is input, the DMB receiver will proceed with step 335. At step 335, the TS demultiplexer 231 demultiplexes the input data and separates the multiplexed video and audio data. Through steps 329 to 331, the separated data will be provided to the user.

Although a preferred embodiment of the present invention has been described for illustrative purposes, those skilled in the art will appreciate that various modifications, additions and substitutions are possible, without departing from the scope and spirit of the invention as disclosed in the accompanying claims, including the full scope of equivalents thereof.

As described above, the present invention can provide digital multimedia broadcasting and other digital multimedia services in a single terminal. Also, various practical multimedia functions can be easily added to the hybrid multimedia broadcasting receiver in accordance with the embodiments of the present invention. It is possible to produce a small-sized hybrid multimedia broadcasting receiver by minimizing the number of elements added to support practical multimedia services. In addition, the present invention can reduce power consumption by reducing data traffic between chips.

## Claims

1. A hybrid digital broadcasting receiver for reproducing digital multimedia data, comprising:
a broadcast receiving module comprising:
a receiving section for receiving and demodulating a digital broadcasting data stream which includes a multiplexed and transmitted plurality of compressively encoded and scrambled programs;
a first demultiplexer for demultiplexing said demodulated digital broadcasting data stream, and selecting and extracting digital broadcasting data corresponding to a program selected by a user;
a conditional access section for detecting conditional access information and decrypting said selected digital broadcasting data using said detected information; and
a decoder module comprising:
a second demultiplexer for demultiplexing a digital multimedia data stream which includes a multiplexed plurality of compressively encoded digital multimedia data; and
a decoding section for decoding digital broadcasting data output from said broadcast receiving module and digital multimedia data output from said second demultiplexer.

2. The hybrid digital broadcasting receiver according to claim 1, further comprising a smart card for receiving said conditional access information and generating a scrambling key.

3. The hybrid digital broadcasting receiver according to claim 1, wherein said conditional access information comprises program management information and subscriber management information.

4. The hybrid digital broadcasting receiver according to claim 2, wherein said conditional access section receives said scrambling key from said smart card and decrypts said digital broadcasting data.

5. The hybrid digital broadcasting receiver according to claim 1, further comprising a multimedia module for supplying said digital multimedia data stream to said second demultiplexer.

6. The hybrid digital broadcasting receiver according to clam 1, wherein said digital multimedia data comprises audio data and video data.

7. The hybrid digital broadcasting receiver according to claim 6, wherein said second demultiplexer separates said audio data and said video data from said digital multimedia data stream.

8. The hybrid digital broadcasting receiver according to claim 1, wherein said broadcast receiving module and said decoder module are each formed in a single integrated circuit.

9. A hybrid digital broadcasting receiver for reproducing digital multimedia data, comprising:
a receiving section for receiving a digital broadcasting data stream which includes multiplexed and transmitted digital broadcasting data packets and conditional access information packets for a plurality of programs;
a first demultiplexer for separating said conditional access information packets and digital broadcasting data packets for a program selected by a user from said received digital broadcasting data stream;
a conditional access section for detecting conditional access information from said conditional access information packets and decrypting said separated digital broadcasting data packets using said conditional access information;
a second demultiplexer for receiving a digital multimedia data stream which includes multiplexed compressively encoded audio packets and video packets, and separating said audio packets and said video packets from said digital multimedia data stream; and
a decoding section for decoding digital broadcasting data packets output from said conditional access section and audio packets and video packets output from said second demultiplexer.

10. The hybrid digital broadcasting receiver according to claim 9, further comprising a smart card for receiving said conditional access information and generating a scrambling key.

11. The hybrid digital broadcasting receiver according to claim 9, wherein said conditional access information comprises program management information and subscriber management information.

12. The hybrid digital broadcasting receiver according to claim 10, wherein said conditional access section receives said scrambling key from said smart card and decrypts said digital broadcasting data.

13. The hybrid digital broadcasting receiver according to claim 9, further comprising a multimedia module for supplying said digital multimedia data stream to said second demultiplexer.

14. The hybrid digital broadcasting receiver according to claim 9, wherein said receiving section, first demultiplexer and conditional access section are formed in a first integrated circuit chip while said second demultiplexer and decoding section are formed in a second integrated circuit chip.

15. A device for processing digital broadcasting data, comprising:
a receiving section for receiving and demodulating a digital broadcasting data stream which includes multiplexed and transferred digital broadcasting data packets and conditional access information packets for a plurality of programs;
an error correcting section for correcting any error in said demodulated digital broadcasting data stream;
a demultiplexer for separating said conditional access information packets and digital broadcasting data packets for a program selected by a user from said demodulated digital broadcasting data stream; and
a conditional access section for detecting conditional access information from said conditional access information packets and decrypting said separated digital broadcasting data packets using said conditional access information.

16. The device according to claim 15, wherein said conditional access information comprises program management information and subscriber management information.

17. The device according to claim 15, further comprising a smart card interface for outputting said conditional access information to a smart card and receiving a scrambling key generated by said smart card.

18. The device according to claim 17, wherein said conditional access section receives said scrambling key from said smart card and decrypts said digital broadcasting data.

19. The device according to claim 15, further comprising a decoder module interface for supplying said decrypted digital broadcasting data to said decoder module.

20. The device according to claim 15, wherein said device is formed in a single integrated circuit chip.

21. A method for providing digital multimedia services in a hybrid digital broadcasting receiver which includes a broadcast receiving module for processing digital broadcasting data and a decoder module for processing compressively encoded digital data, said method comprising the steps of:
receiving a digital broadcasting data stream which includes a multiplexed and transferred plurality of scrambled programs and conditional access information at a broadcast receiving module;
separating said conditional access information and digital broadcasting data for a program selected by a user from said digital broadcasting data stream received at said broadcast receiving module and decrypting said separated digital broadcasting data using said conditional access information;
decoding the digital broadcasting data input from the broadcast receiving module at a decoder module;
receiving a digital multimedia data stream which includes multiplexed compressively encoded audio data and video data at said decoder module; and
demultiplexing said digital multimedia data stream at said decoder module to separate said audio data and said video data and decoding said separated audio data and video data.

22. The method according to claim 21, further comprising the steps of:
determining whether there is a request for receiving digital broadcasting from said user; and
driving said broadcast receiving module and receiving said digital broadcasting data stream when said request is received.

23. The method according to claim 21, wherein said conditional access information comprises program management information and subscriber management information.

24. The method according to claim 21, further comprising the steps of:
supplying said conditional access information to a smart card from said broadcast receiving module;
generating a scrambling key at said smart card using said conditional access information; and
supplying said scrambling key generated by said smart card to said broadcast receiving module to decrypt said separated digital broadcasting data.
